# EUROPÄISCHE PATENTSCHRIFT

(11) **EP 1 396 401 B1**
(45) Veröffentlichungstag und Bekanntmachung des Hinweises auf die Patenterteilung: **03.06.2009**
(21) Anmeldenummer: 03019096.1
(22) Anmeldetag: 22.08.2003
(51) Int. Cl.: B60S 5/06

(54) **Flurförderzeug mit einem auf einer Rollbahn angeordneten Batterieblock**
Industrial truck with a battery assembly arranged on a roller track
Chariot de manutention avec un bloc de batterie sur un une piste de roulage

(30) Priorität: 04.09.2002 DE 10240854
(43) Veröffentlichungstag der Anmeldung: 10.03.2004
(73) Patentinhaber: STILL GmbH, 22113 Hamburg (DE)
(72) Erfinder: Ballhausen, Stephan, 25421 Pinneberg (DE); Buchmann, Michael, 21509 Glinde (DE); Gerdes, Torsten, 21465 Wentorf (DE); Szymanski, Marek, 24306 Kleinmeisdorf Gemeinde Bösdorf (DE)
(74) Vertreter: Geirhos, Johann

(56) Entgegenhaltungen:
- GB-A- 2 317 872
- US-A- 5 360 307
- US-A- 5 595 442
- PATENT ABSTRACTS OF JAPAN Bd. 1996, Nr. 10, 31. Oktober 1996 (1996-10-31) & JP 08 165094 A (NIPPON YUSOKI CO LTD), 25. Juni 1996 (1996-06-25)

## Beschreibung

Die Erfindung betrifft ein Flurförderzeug, insbesondere Gabelstapler, mit einem Batteriefach und einem Batterieblock, der in horizontaler Richtung relativ zu dem Batteriefach bewegbar ist, wobei eine Bodenfläche des Batteriefachs mit einer Rollenbahn ausgerüstet ist wobei das Flurförderzeug mindestens eine krafterzeugende Stellvorrichtung zum Bewegen des Batterieblocks relativ zu dem Batteriefach aufweist.

Der in dem Batteriefach befindliche Batterieblock steht bei gattungsgemäßen Flurförderzeugen auf einer am Boden des Batteriefachs angeordneten Rollenbahn. Während des Betriebs des Flurförderzeugs ist der Batterieblock vor Herausrollen gesichert. Zum Wechseln des Batterieblocks kann dieser auf der Rollenbahn in horizontaler Richtung aus dem Batteriefach heraus geschoben und ein neuer Batterieblock in umgekehrter Richtung in das Batteriefach hinein geschoben werden. Hierzu ist es bekannt, neben dem Flurförderzeug eine externe Rollenbahn anzuordnen, die dann eine Verlängerung der flurförderzeugfesten Rollenbahn darstellt.

Das Verschieben des Batterieblocks auf der Rollenbahn erfolgt üblicherweise durch Muskelkraft. Während dies bei kleineren Flurförderzeugen mit entsprechend leichten Batterieblöcken mit relativ geringem Kraftaufwand möglich ist, lassen sich die schweren Batterieblöcke von großen Flurförderzeugen praktisch nicht manuell verschieben. Batteriewechselsysteme mit waagrechten Rollenbahnen sind aus diesem Grund bei großen Flurförderzeugen nicht gebräuchlich. Auch bei kleinen Flurförderzeugen gestaltet sich das Wechseln der Batterie schwierig, wenn das Flurförderzeug nicht waagrecht steht und der Batterieblock damit schräg nach oben geschoben oder gezogen werden muss.

Aus der GB 2 317 872 A ist eine Batteriewechselvorrichtung bekannt, bei der der Batterieblock mit einer innerhalb des Batteriefachs umlaufenden Kette bewegt werden kann. Der Batterieblock kann dabei mittels der Kette teilweise aus dem Batteriefach heraus bewegt werden und rollt dann auf einer Rollenbahn - infolge der Massenträgheit des Batterieblocks oder durch eine geringfügige Neigung der Rollenbahn - vollständig aus dem Batteriefach heraus.

Der vorliegenden Erfindung liegt die Aufgabe zugrunde, ein Flurförderzeug der eingangs genannten Art zur Verfügung zu stellen, bei dem ein besonderes Verbindungselement an dem Batterieblock nicht erforderlich ist.

Diese Aufgabe wird erfindungsgemäß dadurch gelöst, dass die Stellvorrichtung und die Rollenbahn derart ausgeführt sind, dass der Batterieblock mittels der Kraft der Stellvorrichtung vollständig aus dem Batteriefach heraus bewegbar ist.und dass eine Lagerplatte vorgesehen ist, auf der der Batterieblock abstellbar ist, und die Laserplatte mechanisch mit der Stellvorrichtung verbunden ist.

Die Stellvorrichtung erzeugt die zum Verschieben des Batterieblocks auf der Rollenbahn erforderliche Kraft. Die erfindungsgemäße Stellvorrichtung kann insbesondere in Verbindung mit einer ausziehbaren oder ausklappbaren Rollenbahn eingesetzt werden, auf welcher der Batterieblock vollständig aus dem Flurförderzeug heraus bewegbar ist. Mit der Stellvorrichtung kann eine Bewegung des Batterieblocks in beide Richtungen, also ein Entfernen und ein Einsetzen des Batterieblocks gleichermaßen unterstützt werden. Bei dieser Anordnung wird mittels der Stellvorrichtung die Lagerplatte bewegt, auf der der Batterieblock abgestellt ist.

Gemäß einer ersten möglichen Ausgestaltungsform weist der Batterieblock ein Verbindungselement zum mechanischen Verbinden des Batterieblocks mit der Stellvorrichtung auf. Zwischen dem Verbindungselement und der Stellvorrichtung liegt dabei vorzugsweise eine formschlüssige Verbindung vor, die eine Kraftübertragung in beide Richtungen ermöglicht, jedoch zum Wechseln des Batterieblocks in einfacher Weise lösbar ist. Das Verbindungselement kann beispielsweise als Mitnehmer ausgeführt sein, in welchen die Stellvorrichtung mittels eines geeigneten Gegenstücks eingreift.

Um eine Bewegung des Batterieblocks in einfacher Weise in beide Richtungen unterstützen zu können, ist die Stellvorrichtung in beide Richtungen wirksam. Ein bewegbares Teil der Stellvorrichtung kann damit in beide Bewegungsrichtungen aktiv angetrieben werden.

Gemäß einer ersten zweckmäßigen Ausgestaltung der Erfindung weist die Stellvorrichtung eine Gewindespindel auf. Die Gewindespindel wird dabei durch einen Elektromotor angetrieben und überträgt ihre Stellkraft direkt auf die den Batterieblock tragende Lagerplatte.

Hierbei ist die Gewindespindel vorzugsweise zumindest dreiteilig ausgeführt. Dies ist erforderlich, um bei der maximalen Baulänge in eingefahrenem Zustand, welche der Breite des Batteriefach entspricht, ein vollständiges Herausbewegen des Batterieblocks aus dem Batteriefach zu ermöglichen. Die Gewindespindel weist dabei einen feststehenden Abschnitt und zwei ausfahrbare Abschnitte auf.

Eine andere zweckmäßige Ausgestaltung sieht vor, dass die Stellvorrichtung einen Druckmittelzylinder, beispielsweise einen Hydraulikzylinder oder Pneumatikzylinder aufweist. Ein Hydraulikzylinder kann mit der in einem Flurförderzeug ohnehin vorhandenen Hydraulikanlage versorgt werden. Die Kraft des Druckmittelzylinders wird direkt auf die Lagerplatte übertragen.

Um die erforderliche Ausfahrlänge zu gewährleisten, weist der Druckmittelzylinder analog zu der Gewindespindel mindestens zwei koaxial ausfahrbare Kolbenstangen auf.

Eine andere mögliche Ausführungsform der Erfindung liegt vor, wenn die Stellvorrichtung ein umlaufendes Zugmittel, beispielsweise eine Kette, ein Seil oder einen Riemen aufweist. Das umlaufende Zugmittel wird dabei beispielsweise mittels eines Elektromotors angetrieben. Um den erforderlichen Verschiebeweg des Batterieblocks realisieren zu können, ist eine Rolle bzw. ein Kettenrad aus dem Batterieraum heraus bewegbar, beispielsweise an dem ausziehbaren Teil einer zweiteiligen Rollenbahn.

Ebenso ist es gemäß einer anderen möglichen Ausführungsform zweckmäßig, wenn die Stellvorrichtung eine zum Übertragen von Druckkräften geeignete Schubkette aufweist. Bei einer Schubkette lassen sich die Kettenglieder durch entsprechende konstruktive Gestaltung nur zu einer Seite hin klappen. Damit können bei einer festen Einspannung des freien Endes der Schubkette und entsprechender Führung des angetriebenen Endes der Kette auch Druckkräfte übertragen werden.

Eine weitere Ausführungsform der Erfindung sieht vor, dass die Stellvorrichtung einen Antrieb für mindestens eine Rolle der Rollenbahn aufweist. Hierbei werden zumindest einige der Rollen der Rollenplattform angetrieben. Es ist zu gewährleisten, dass die Lagerplatte in jeder Position mit mindestens einer angetriebenen Rolle in Kontakt stehen. Der Antrieb der Rollen kann beispielsweise über Zahnriemen durch einen Elektromotor erfolgen.

Unabhängig von der Gestaltung der Stellvorrichtung ist es zweckmäßig, wenn die Rollenbahn zwei- oder mehrteilig ausgeführt ist, wobei mindestens ein Teil der Rollenbahn derart aus dem Batteriefach heraus bewegbar ist, dass der Batterieblock auf der Rollenbahn vollständig aus dem Flurförderzeug heraus bewegbar ist.

Weitere Vorteile und Einzelheiten der Erfindung werden anhand des in den schematischen Figuren dargestellten Ausführungsbeispiels näher erläutert. Dabei zeigt
- Figur 1: ein Batteriefach mit einer eine Gewindespindel aufweisenden Stellvorrichtung,
- Figur 2: ein Batteriefach mit einer einen Druckmittelzylinder aufweisenden Stellvorrichtung,
- Figur 3: ein Batteriefach mit einer ein umlaufendes Zugmittel aufweisenden Stellvorrichtung,
- Figur 4: ein Batteriefach mit einer eine Schubkette aufweisenden Stellvorrichtung.

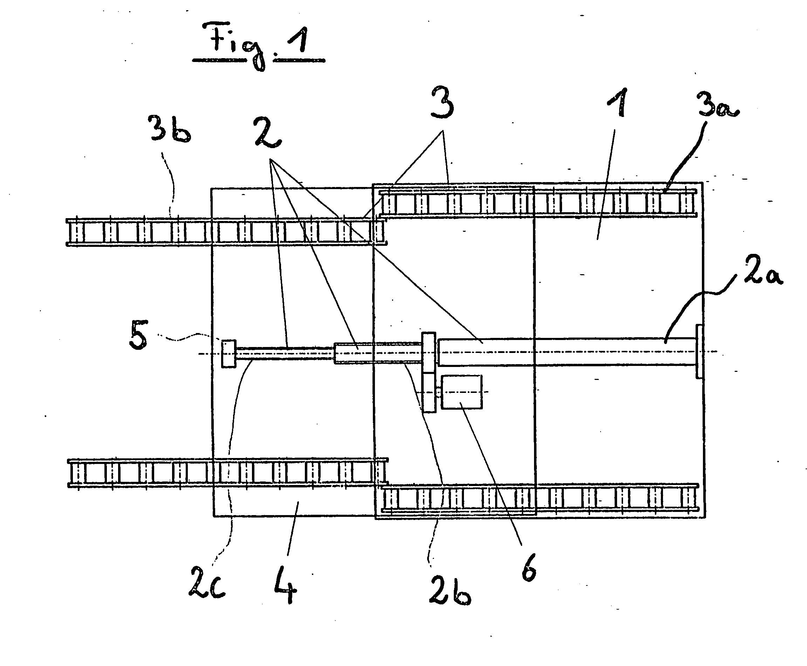

Figur 1 zeigt ein Batteriefach 1 mit einer eine Gewindespindel 2 aufweisenden Stellvorrichtung. Das Batteriefach 1 ist mit einer Rollenbahn 3 ausgerüstet, die ein in dem Batteriefach 1 fest angeordnetes Teil 3a und ein aus dem Batteriefach 1 ausfahrbares Teil 3b aufweist. Ein auf der Rollenbahn 3 befindlicher Batterieblock 4 ist in einer halb aus dem Batteriefach 1 herausgezogenen Stellung dargestellt. Die Gewindespindel 2 besitzt ein am Batteriefach 1 befestigtes Teil 2a, eine erste ausfahrbare Spindel 2b und eine zweite ausfahrbare Spindel 2c. Die zweite ausfahrbare Spindel 2c ist über ein Verbindungselement 5 derart mit dem Batterieblock 4 verbunden, dass Druck- und Zugkräfte übertragen werden können. Der Antrieb der Gewindespindel erfolgt über einen Elektromotor 6, dessen Rotor mit der ersten ausfahrbaren Spindel 2b drehstarr verbunden ist. Möglich ist auch ein manueller Antrieb der Gewindespindel, beispielsweise mittels einer aufsteckbaren Kurbel.

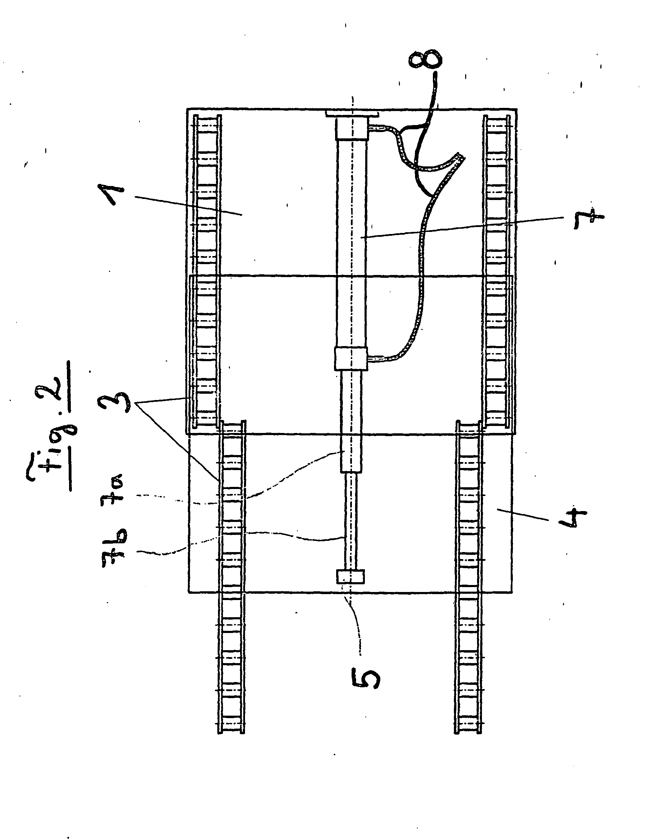

In Figur 2 ist ein Batteriefach 1 mit einer einen Druckmittelzylinder aufweisenden Stellvorrichtung dargestellt. Das Batteriefach 1, die Rollenbahn 3 und der Batterieblock 4 entspricht der Anordnung gemäß Fig. 1. Die Stellvorrichtung weist als Druckmittelzylinder einen Hydraulikzylinder 7 auf, der zwei teleskopisch ausfahrbare Kolben 7a, 7b besitzt. Der am weitesten ausfahrbare Kolben ist mittels eines Verbindungselements 5 mit dem Batterieblock 4 verbunden. Die Versorgung des Hydraulikzylinders 7 mit Hydrauliköl erfolgt über hydraulische Schlauchleitungen 8 durch die Arbeitshydraulikanlage des Flurförderzeugs.

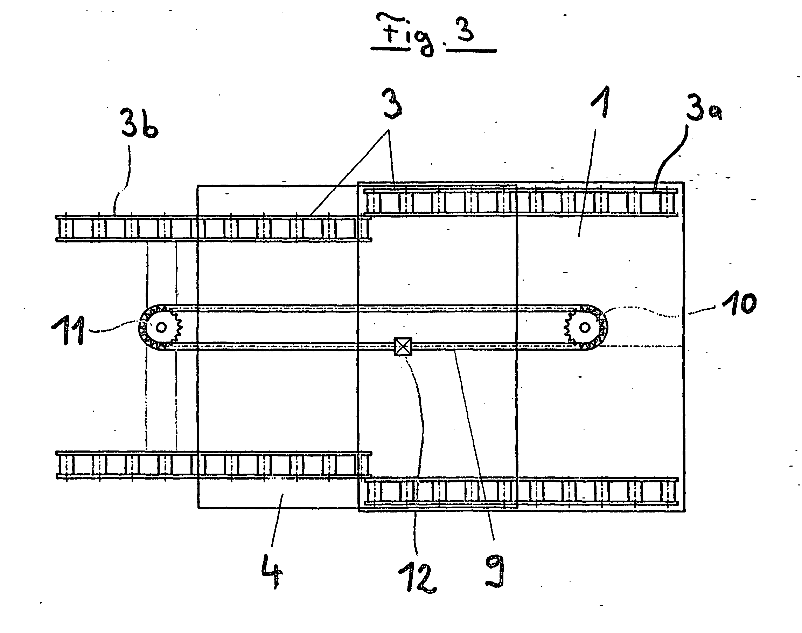

Figur 3 zeigt ein Batteriefach 1 mit einer ein umlaufendes Zugmittel 9 aufweisenden Stellvorrichtung. Das Batteriefach 1, die Rollenbahn 3 und der Batterieblock 4 entsprechen auch hier der Anordnung gemäß Fig. 1. Als umlaufendes Zugmittel 9 ist im dargestellten Ausführungsbeispiel eine um zwei Kettenräder 10, 11 gespannte Kette vorgesehen, wobei ein erstes Kettenrad 10 fest im Batteriefach 1 und ein zweites Kettenrad 11 an dem ausfahrbaren Teil 3b der Rollenbahn 3 gelagert ist. Das Zugmittel 9 wird damit erst durch vollständiges Ausziehen der Rollenbahn 3 gespannt. Bei eingefahrener Rollenbahn 3 befindet sich das dann nicht gespannte Zugmittel unterhalb des Batterieblocks 4. Der Antrieb des Zugmittels 9 erfolgt vorzugsweise über das erste Kettenrad 10, beispielsweise mittels eines unter dem Batteriefach 1 angeordneten Elektromotors. Die Anbindung des Zugmittels 9 an den Batterieblock 4 erfolgt mittels eines Verbindungselements 12.

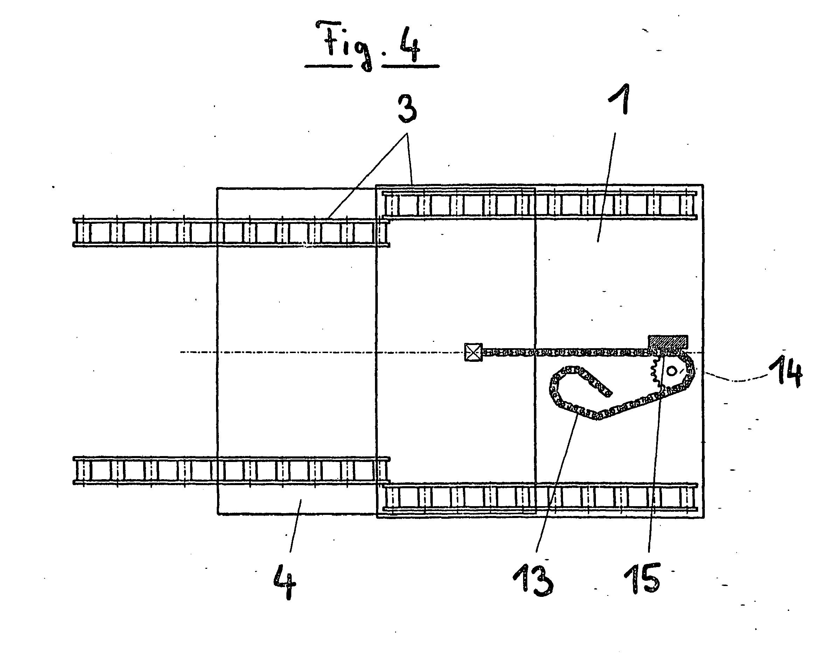

In Figur 4 ist ein Batteriefach mit einer eine Schubkette 13 aufweisenden Stellvorrichtung dargestellt. Die Anordnung des Batteriefachs 1, der Rollenbahn 3 und des Batterieblocks 4 ist analog zu der Anordnung gemäß Fig. 1. Die Glieder der Schubkette lassen sich aufgrund ihrer Formgebung nur zu einer Seite hin klappen. Der Antrieb der Schubkette 13 erfolgt über ein einziges flurförderzeugfestes Kettenrad 14. Die im Bereich des Kettenrads 14 angeordnete Führung 15 stellt die kraftübertragende Verbindung zwischen Kettenrad 14 und Schubkette 13 jederzeit sicher. Insbesondere bei dieser Ausbildung der Stellvorrichtung steht der Batterieblock 4 auf einer Lagerplatte, welche fest mit dem Ende der Schubkette 13 verbunden ist.

Die Lagerung des Batterieblocks 4 auf einer Lagerplatte ist jedoch auch bei den Ausführungsbeispielen gemäß Fig. 1, 2 und 3 möglich und vorteilhaft, da die Stellvorrichtung fest mit der Lagerplatte verbunden werden kann, bei einer Anordnung ohne Lagerplatte jedoch ein lösbares Verbindungselement zur direkten Anbindung der Stellvorrichtung an den Batterieblock 4 vorgesehen werden muss.

## Patentansprüche

1. Flurförderzeug, insbesondere Gabelstapler, mit einem Batteriefach (1) und einem Batterieblock (4), der in horizontaler Richtung relativ zu dem Batteriefach (1) bewegbar ist, wobei eine Bodenfläche des Batteriefachs (1) mit einer Rollenbahn (3) ausgerüstet ist, wobei das Flurförderzeug mindestens eine krafterzeugende Stellvorrichtung zum Bewegen des Batterieblocks (4) relativ zu dem Batteriefach (1) aufweist, wobei
die Stellvorrichtung und die Rollenbahn derart ausgeführt sind, dass der Batterieblock (4) mittels der Kraft der Stellvorrichtung vollständig aus dem Batteriefach (1) heraus bewegbar ist, **dadurch gekennzeichnet, dass** eine Lagerplatte vorgesehen ist, auf der der Batterieblock (4) abstellbar ist, und die Lagerplatte mechanisch mit der Stellvorrichtung verbunden ist.

2. Flurförderzeug nach Anspruch 1, **dadurch gekennzeichnet, dass** die Stellvorrichtung in beide Richtungen wirksam ist.

3. Flurförderzeug nach einem der Ansprüche 1 oder 2, **dadurch gekennzeichnet, dass** die Stellvorrichtung eine Gewindespindel (2) aufweist.

4. Flurförderzeug nach Anspruch 3, **dadurch gekennzeichnet, dass** die Gewindespindel (2) zumindest dreiteilig ausgeführt ist.

5. Flurförderzeug nach einem der Ansprüche 1 oder 2, **dadurch gekennzeichnet, dass** die Stellvorrichtung einen Druckmittelzylinder (7), beispielsweise einen Hydraulikzylinder oder Pneumatikzylinder aufweist.

6. Flurförderzeug nach Anspruch 5, **dadurch gekennzeichnet, dass** der Druckmittelzylinder (7) mindestens zwei koaxial ausfahrbare Kolbenstangen(7a, 7b) aufweist.

7. Flurförderzeug nach Anspruch 2, **dadurch gekennzeichnet, dass** die Stellvorrichtung ein umlaufendes Zugmittel (9), beispielsweise eine Kette, ein Seil oder einen Riemen aufweist.

8. Flurförderzeug nach Anspruch 2, **dadurch gekennzeichnet, dass** die Stellvorrichtung eine zum Übertragen von Druckkräften geeignete Schubkette (13) aufweist.

9. Flurförderzeug nach Anspruch 2, **dadurch gekennzeichnet, dass** die Stellvorrichtung einen Antrieb für mindestens eine Rolle der Rollenbahn (3) aufweist.

10. Flurförderzeug nach einem der Ansprüche 1 bis 9, **dadurch gekennzeichnet, dass** die Rollenbahn (3) zwei- oder mehrteilig ausgeführt ist, wobei mindestens ein Teil (3b) der Rollenbahn (3) derart aus dem Batteriefach (1) heraus bewegbar ist, dass der Batterieblock (4) auf der Rollenbahn (3) vollständig außerhalb das Flurförderzeug bewegbar ist.

## Claims

1. Industrial truck, in particular a fork-lift truck, with a battery compartment (1) and a battery pack (4), which is capable of being moved in the horizontal direction relative to the battery compartment (1), a bottom face of the battery compartment (1) being equipped with a roller conveyor (3), the industrial truck having at least one force-generating actuating apparatus for moving the battery pack (4) relative to the battery compartment (1), the actuating apparatus and the roller conveyor being configured in such a way that the battery pack (4) is capable of being moved completely out of the battery compartment (1) by means of the force of the actuating apparatus, **characterized in that** a bearing plate is provided on which the battery pack (4) can be positioned, and the bearing plate is mechanically connected to the actuating apparatus.

2. Industrial truck according to Claim 1, **characterized in that** the actuating apparatus is effective in both directions.

3. Industrial truck according to either of Claims 1 and 2, **characterized in that** the actuating apparatus has a threaded spindle (2).

4. Industrial truck according to Claim 3, **characterized in that** the threaded spindle (2) is formed in at least three parts.

5. Industrial truck according to either of Claims 1 and 2, **characterized in that** the actuating apparatus has a pressure medium cylinder (7), for example a hydraulic cylinder or pneumatic cylinder.

6. Industrial truck according to Claim 5, **characterized in that** the pressure medium cylinder (7) has at least two piston rods (7a, 7b), which are capable of extending coaxially.

7. Industrial truck according to Claim 2, **characterized in that** the actuating apparatus has a peripheral tensioning means (9), for example a chain, a cable or a belt.

8. Industrial truck according to Claim 2, **characterized in that** the actuating apparatus has a thrust chain (13), which is suitable for transmitting compression forces.

9. Industrial truck according to Claim 2, **characterized in that** the actuating apparatus has a drive for at least one roller of the roller conveyor (3).

10. Industrial truck according to one of Claims 1 to 9, **characterized in that** the roller conveyor (3) is formed in two or more parts, at least one part (3b) of the roller conveyor (3) being capable of being moved out of the battery compartment (1) in such a way that the battery pack (4) is capable of being moved on the roller conveyor (3) completely outside of the industrial truck.

## Revendications

1. Chariot de manutention, en particulier chariot élévateur à fourche, comprenant un compartiment de batterie (1) et un bloc de batterie (4), qui peut être déplacé dans la direction horizontale par rapport au compartiment de batterie (1), une surface de fond du compartiment de batterie (1) étant équipée d'une piste de roulement (3), le chariot de manutention présentant au moins un dispositif dé réglage générateur de force pour le déplacement du bloc de batterie (4) par rapport au compartiment de batterie (1),
le dispositif de réglage et la piste de roulement étant réalisés de telle sorte que le bloc de batterie (4) puisse être déplacé au moyen de la force du dispositif de réglage complètement hors du compartiment de batterie (1), **caractérisé en ce que** l'on prévoit une plaque de palier sur laquelle le bloc de batterie (4) peut être déposé, et la plaque de palier est connectée mécaniquement au dispositif de réglage.

2. Chariot de manutention selon la revendication 1, **caractérisé en ce que** le dispositif de réglage agit dans les deux directions.

3. Chariot de manutention selon l'une quelconque des revendications 1 ou 2, **caractérisé en ce que** le dispositif de réglage présente une broche filetée (2).

4. Chariot de manutention selon la revendication 3, **caractérisé en ce que** la broche filetée (2) est réalisée au moins en trois parties.

5. Chariot de manutention selon l'une quelconque des revendications 1 ou 2, **caractérisé en ce que** le dispositif de réglage présente un cylindre de fluide sous pression (7), par exemple un cylindre hydraulique ou un cylindre pneumatique.

6. Chariot de manutention selon la revendication 5, **caractérisé en ce que** le cylindre de fluide sous pression (7) présente au moins deux tiges de piston (7a, 7b) pouvant être déployées coaxialement.

7. Chariot de manutention selon la revendication 2, **caractérisé en ce que** le dispositif de réglage présente un moyen de traction entraîné en rotation (9), par exemple une chaîne, un câble ou une courroie.

8. Chariot de manutention selon la revendication 2, **caractérisé en ce que** le dispositif de réglage présente une chaîne de poussée (13) appropriée pour transférer les forces de pression.

9. Chariot de manutention selon la revendication 2, **caractérisé en ce que** le dispositif de réglage présente un entraînement pour au moins un rouleau de la piste de roulement (3).

10. Chariot de manutention selon l'une quelconque des revendications 1 à 9, **caractérisé en ce que** la piste de roulement (3) est réalisée en deux parties ou plus, au moins une partie (3b) de la piste de roulement (3) pouvant être déplacée hors du compartiment de batterie (1) de telle sorte que le bloc de batterie (4) puisse être déplacé sur la piste de roulement (3) complètement en dehors du chariot de manutention.
